# FASCICULE DE BREVET EUROPEEN

(11) **EP 3 268 208 B1**
(45) Date de publication et mention de la délivrance du brevet: **15.01.2025**
(21) Numéro de dépôt: 16714987.1
(22) Date de dépôt: 29.02.2016
(51) Int. Cl.: B29C 65/08, B65H 19/18

(54) **PROCÉDÉ DE LAMINAGE PAR ULTRASONS D'UN ARTICLE THERMOFUSIBLE, ET DISPOSITIF DE LAMINAGE POUR LA MISE EN OEUVRE DUDIT PROCÉDÉ**
VERFAHREN ZUM LAMINIEREN EINES HEISSSCHMELZARTIKELS MITTELS ULTRASCHALL UND LAMINIERVORRICHTUNG ZUR DURCHFÜHRUNG DES VERFAHRENS
PROCESS FOR LAMINATING OF A HOTMELT ARTICLE BY ULTRASOUND AND LAMINATING DEVICE FOR IMPLEMENTING SAID PROCESS

(30) Priorité: 12.03.2015 FR 1552051
(43) Date de publication de la demande: 17.01.2018
(73) Titulaire: Spoolex, 42230 Roche La Moliere (FR)
(72) Inventeur: LASSALLE, Luc, 42100 Saint-Etienne (FR)
(74) Mandataire: Cabinet Laurent & Charras
(86) Numéro de dépôt international: PCT/FR2016/050450
(87) Numéro de publication internationale: WO 2016/142602

(56) Documents cités:
- EP-A1- 1 510 459
- EP-A2- 1 110 701
- JP-A- H02 227 238
- US-A1- 2014 311 654
- THOMAS HERRMANN ET AL: "Schweissen statt Clipsen", KUNSTOFFE, CARL HANSER VERLAG, MUNCHEN, DE, no. 3, 1 March 2011 (2011-03-01), pages 115 - 117, XP001525774, ISSN: 0023-5563

## Description

### DOMAINE TECHNIQUE

La présente invention concerne un procédé de laminage perfectionné par ultrasons d'un article thermofusible. L'invention concerne également un dispositif de laminage pour la mise en oeuvre dudit procédé.

L'invention trouve une application avantageuse dans le domaine du raboutage de deux articles thermofusibles, par exemple présentés sous forme de bandes ou de nappes.

Le raboutage est une technique bien connue de l'Homme du Métier qui consiste notamment à rendre solidaires deux bandes ou nappes d'un article thermofusible. Par exemple, le raboutage permet de rendre solidaires l'extrémité finale d'une nappe issue du déroulement d'une première bobine de dévidage, avec l'extrémité initiale d'une nappe issue du déroulement d'une deuxième bobine de dévidage afin de former un seul article continu. Le laminage est notamment mis en oeuvre pour obtenir un raboutage parfait, sans rebord ou bourrelet par exemple au niveau de la jointure des deux nappes.

### ETAT ANTERIEUR DE LA TECHNIQUE

Dans l'état de la technique actuelle, il est connu d'utiliser une sonotrode pour effectuer des opérations de laminage par ultrasons d'un article thermofusible, constitué par exemple de deux bandes ou nappes raboutées.

Pour l'opération de raboutage, les deux nappes sont tendues et superposées. Ces deux nappes sont ensuite maintenues en position et simultanément découpées et soudées par l'intermédiaire de moyens de coupe soudante à sonotrode par exemple. Cette opération de coupage/soudage permet par exemple de joindre l'extrémité finale de la première nappe à l'extrémité initiale de la deuxième nappe.

La zone de soudure et de découpe est légèrement déformée par une remise partielle à plat et forme ainsi une sorte de bec dont la résistance est fragile et précaire. L'étape suivante consiste alors à laminer ledit bec pour parfaire l'opération de raboutage. Une fois laminées, les deux nappes sont confondues pour ne former qu'un seul article. Le laminage s'effectue par exemple par le déplacement de la sonotrode le long de la soudure et en appui sur celle-ci.

Une autre technique de raboutage consiste à faire chevaucher deux nappes thermofusibles et à laminer directement, et au moyen de la sonotrode, la zone de chevauchement pour confondre lesdites deux nappes et ne former qu'un seul article.

Quelle que soit la technique utilisée, les qualités visuelle et tactile du laminage obtenu peuvent être très nettement améliorées, il en est de même pour la vitesse dudit laminage, et donc le rendement.

En effet, il existe des contraintes d'adhérence entre la sonotrode et l'article à laminer, mais aussi des contraintes de refoulement dudit article au passage de la sonotrode, qui, d'une part, limitent la vitesse de déplacement de la sonotrode et, d'autre part, peuvent entraîner des dégradations dudit article. A titre d'exemple, lors du laminage d'une soudure entre deux nappes thermofusibles présentant une densité de 80 g/m², et avec une sonotrode présentant une fréquence comprise entre 20 kHz et 50 kHz, la vitesse de déplacement de la sonotrode ne peut excéder 30 millimètres par seconde.

Le document US2014/0311654 décrit un procédé de soudage par laminage de deux articles thermofusibles, par ultrasons et au moyen d'une sonotrode, selon le préambule de la revendication 1.

### EXPOSE DE L'INVENTION

L'un des buts de l'invention est de fournir un procédé de laminage perfectionné par ultrasons d'un article thermofusible permettant d'améliorer les qualités visuelle et tactile du laminage obtenu.

Un autre objectif de l'invention est de fournir un procédé de laminage à grande vitesse, permettant notamment d'améliorer considérablement le rendement d'un dispositif de raboutage de l'état de la technique.

A cet effet, il a donc été mis au point un procédé de laminage d'un article thermofusible par ultrasons et au moyen d'une sonotrode remarquable en ce qu'il consiste à effectuer l'opération de laminage en déplaçant la sonotrode dans le plan de l'article thermofusible à laminer, avec ladite sonotrode en appui sur une bande apte à conduire les vibrations générées par la sonotrode, positionnée entre ladite sonotrode et l'article thermofusible à laminer.

De cette manière, le laminage est effectué au travers de la bande, avec la sonotrode en appui sur celle-ci. La bande permet notamment le transfert des efforts nécessaires au laminage tout en supprimant les contraintes de refoulement dudit article au passage de ladite sonotrode (effet de bourrelet devant la sonotrode). De plus, la bande permet le maintien en position de l'article à laminer, notamment au niveau de la zone à laminer pour une opération de laminage optimale.

Le laminage de l'article thermofusible est effectué au travers de ladite bande de sorte qu'il n'y a pas de dégradation dudit article. Bien entendu, ladite bande comprend une épaisseur suffisamment fine pour qu'il n'y ait pas de perte de puissance d'amplitude et de fréquence de la sonotrode. L'invention permet ainsi d'obtenir de meilleures qualités visuelle et tactile du laminage obtenu, étant donné que le refoulement de l'article est supprimé, et que ledit laminage est effectué sans contact direct entre la sonotrode et l'article thermofusible.

Selon l'invention, le coefficient de frottement entre la bande et la sonotrode est inférieur au coefficient de frottement entre l'article à laminer et la sonotrode.

Ainsi, le laminage peut être effectué à grande vitesse. En effet, la bande permet également de supprimer les contraintes d'adhérence de la sonotrode sur l'article. Il n'y a pas de phénomène de refoulement de l'article devant la sonotrode.

A titre d'exemple, lors du laminage d'une soudure entre deux nappes thermofusibles présentant une densité de 80 g/m², et avec une sonotrode présentant une fréquence comprise entre 20 kHz et 50 kHz, la vitesse de déplacement de la sonotrode avec le procédé de laminage selon l'invention est de l'ordre de 300 millimètres par seconde, soit une vitesse de laminage et un rendement multipliés par 10 par rapport à l'état de la technique actuelle. Le coefficient de frottement entre la sonotrode et l'article à laminer est de 0.25 alors que le coefficient de frottement entre la sonotrode et la bande est de 0.1.

Selon des formes de réalisation particulières, la bande consiste en une bande de matière plastique, ou en une bande, telle qu'une bande de papier ou de tissu de verre par exemple, imprégnée ou enduite d'un revêtement à faible coefficient de frottement avec la sonotrode, tel que du polytétrafluoroéthylène par exemple.

L'invention vise également à fournir un dispositif de laminage d'un article thermofusible par ultrasons au moyen d'une sonotrode. Le dispositif de laminage comprend une sonotrode positionnée au droit de l'article thermofusible à laminer, déplaçable relativement par rapport à l'article et dans le plan dudit article.

Selon l'invention, le dispositif de laminage comprend une bande, apte à conduire les vibrations générées par la sonotrode, positionnée entre la sonotrode et l'article à laminer. La sonotrode est déplaçable entre une position de repos dans laquelle elle n'est pas en contact avec la bande, et une position de laminage dans laquelle elle est en appui sur la bande pour réaliser l'opération de laminage en tant que telle.

Ce dispositif de laminage permet donc de réaliser un laminage optimal, les qualités visuelle et tactile dudit laminage étant très nettement améliorées.

Selon l'invention, le coefficient de frottement entre la bande et la sonotrode est inférieur au coefficient de frottement entre l'article à laminer et la sonotrode, de sorte que le laminage est effectué à grande vitesse.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 est une représentation schématique illustrant, vu de côté, le positionnement de la bande avant laminage, entre l'article à laminer et la sonotrode, dans une opération de raboutage par chevauchement ;
- la figure 1a est une représentation schématique similaire à celle de la figure 1, représentant le procédé selon l'invention dans une opération de raboutage par coupage soudage ;
- la figure 2 est une représentation schématique similaire à celle de la figure 1, représentant l'opération de laminage en tant que telle, avec la sonotrode en appui sur la bande ;
- la figure 2a est une représentation schématique similaire à celle de la figure 1a, représentant l'opération de laminage en tant que telle ;
- la figure 3 est une représentation schématique similaire à celle de la figure 1, illustrant le résultat du procédé de laminage selon l'invention ;
- la figure 3a est une représentation schématique similaire à celle de la figure 1a, illustrant le résultat du procédé de laminage selon l'invention ;
- la figure 4 est une représentation schématique illustrant en perspective un dispositif de laminage selon l'invention, agencé dans une installation de raboutage de deux nappes thermofusibles.

### EXPOSE DETAILLE DE L'INVENTION

L'invention concerne un procédé et un dispositif de laminage (6) permettant de réaliser un laminage à grande vitesse et par ultrasons au moyen d'une sonotrode (2) d'un article (1) thermofusible.

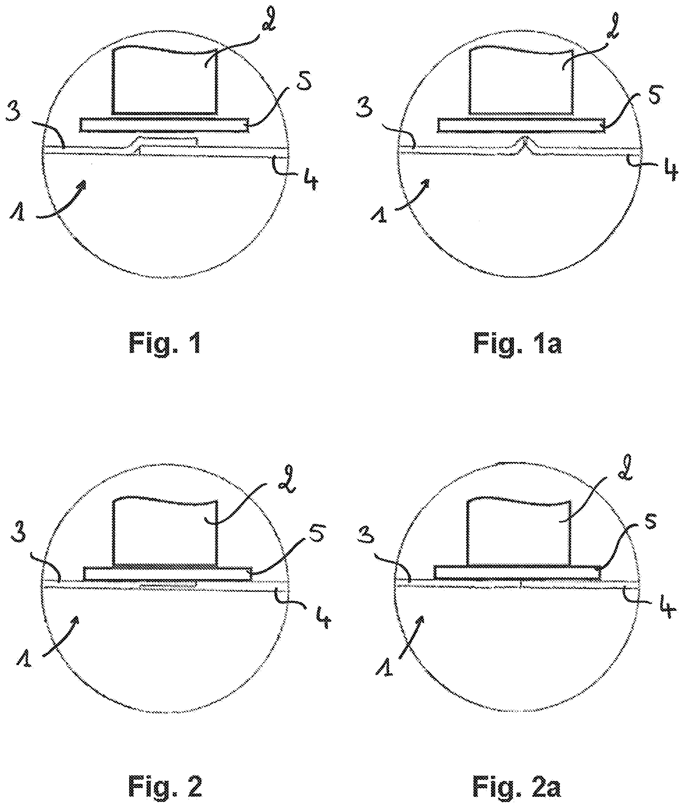

En référence aux figures 1, 2 et 3, l'article (1) thermofusible à laminer est par exemple constitué par deux nappes thermofusibles (3, 4) en chevauchement, destinées à être raboutées par une opération de laminage par ultrasons.

En référence aux figures 1a, 2a et 3a, et 4 l'article (1) thermofusible à laminer peut par exemple être aussi constitué par deux nappes thermofusibles (3, 4) raboutées par la technique de coupage soudage, dont il faut rabouter la zone de soudure pour éliminer le bec et parfaire le raboutage.

Selon l'invention, et en référence aux figures 1 et 1a, pour effectuer le laminage de l'article (1) thermofusible, il convient de positionner au niveau de la zone à laminer, une bande (5) apte à conduire les vibrations générées par la sonotrode entre ladite sonotrode (2) et ledit article (1).

La bande (5) peut consister en une bande (5) de matière plastique, ou en une bande (5) de matériau, tel du papier ou du tissu de verre par exemple, ou tout autre matériau approprié.

Il est évident que l'épaisseur de la bande (5) est à ajuster en fonction des caractéristiques de la sonotrode (2). En effet, ladite bande (5) doit comprendre une épaisseur suffisamment fine pour qu'il n'y ait pas de perte de puissance d'amplitude et de fréquence de la sonotrode (2). L'Homme du Métier saura, bien entendu, adapter l'épaisseur de la bande (5) en fonction de la sonotrode (2) qu'il utilise. D'une manière essentielle, la bande ne doit pas empêcher la transmission des vibrations générées par la sonotrode (2).

D'une manière avantageuse, la bande (5) présente un très faible coefficient de frottement avec la sonotrode (2) qui peut être réalisée en titane, aluminium, ou en acier. Par exemple la bande (5) consiste en une bande imprégnée ou enduite d'un revêtement, tel que du polytétrafluoroéthylène par exemple. L'essentiel réside dans le fait que le coefficient de frottement entre la bande (5) et la sonotrode (2) est inférieur au coefficient de frottement entre l'article (1) à laminer et la sonotrode (2). En effet, plus le coefficient de frottement est faible, plus la sonotrode peut se déplacer à grande vitesse.

A titre d'exemple, la sonotrode (2) utilisée dans un mode de réalisation préféré de l'invention consiste en une sonotrode (2) présentant une fréquence comprise entre 20 kHz à 50 kHz, et la bande (5) de papier imprégnée de polytétrafluoroéthylène utilisée possède une épaisseur comprise entre 0.1 et 1 millimètre.

La bande (5) de papier est imprégnée de polytétrafluoroéthylène par dispersion sur sa face destinée à être en contact avec la sonotrode (2). Cette bande (5) de papier imprégnée de polytétrafluoroéthylène possède une excellente résistance thermique, un coefficient de frottement avec la sonotrode (2) extrêmement faible, notamment de l'ordre de 0.04 pour une sonotrode (2) en acier, ainsi qu'une excellente tenue à la friction.

En référence aux figures 2 et 2a, l'opération de laminage est effectuée avec la sonotrode (2) en appui sur la bande (5) Le laminage est effectué au travers de ladite bande (5). De cette manière, la bande (5) permet le transfert des efforts nécessaires au laminage tout en supprimant les contraintes d'adhérence de la sonotrode (2) sur l'article (1), et de refoulement dudit article (1) au passage de ladite sonotrode (2). De plus, la bande (5) permet le maintien en position de l'article (1) à laminer, notamment au niveau de la zone à laminer pour une opération de laminage optimale.

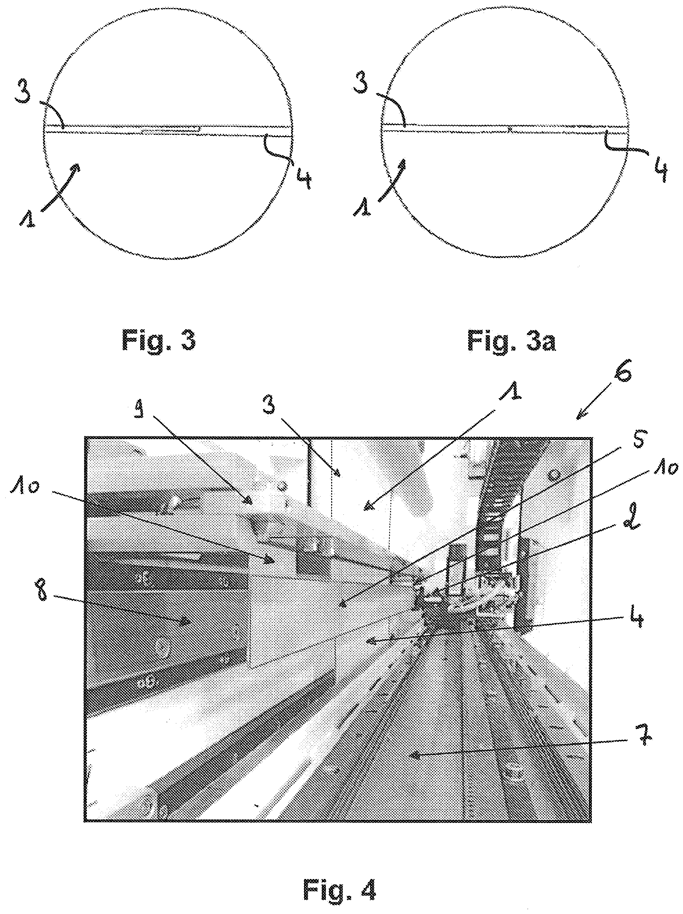

En référence aux figures 3 et 3a, on obtient un laminage dont les qualités visuelle et tactile sont optimales car le laminage est effectué sans contact direct entre la sonotrode (2) et l'article (1) thermofusible.

Les frottements entre la sonotrode (2) et la bande (5) sont très nettement diminués, et il n'y a pas d'effet de refoulement de l'article (1) au passage de ladite sonotrode (2), de sorte qu'il est possible d'augmenter considérablement la vitesse de déplacement de la sonotrode (2).

En référence à la figure 4, l'invention se présente sous la forme d'un dispositif de laminage (6), par exemple mis en oeuvre dans un dispositif de raboutage de deux nappes (3, 4) thermofusibles pour former un seul article (1). Le dispositif de raboutage est notamment associé à une machine textile mettant par exemple en oeuvre des bobines de dévidage. Le dispositif permet ainsi de rabouter l'extrémité finale d'une première nappe (3) thermofusible issue d'une première bobine de dévidage, avec l'extrémité initiale d'une deuxième nappe (4) thermofusible issue d'une deuxième bobine de dévidage.

Le dispositif de raboutage comprend par exemple un ensemble de coupage/soudage destiné à réaliser les opérations de coupe et de soudage en combinaison avec un organe de contre-appui.

Une fois l'opération de coupage/soudage effectuée, la zone de soudure matérialisée par un bec ou un rebord est déplacée jusqu'au dispositif de laminage (6) selon l'invention. Le dispositif de laminage (6) comprend une sonotrode (2) positionnée au droit de l'article (1) thermofusible et déplaçable relativement par rapport à l'article (1) et transversalement par rapport audit article (1), notamment le long de la soudure. La sonotrode (2) est, de manière connue de l'état de la technique, déplaçable par exemple le long d'un rail (7). Un organe de contre-appui (8), telle qu'une surface plane par exemple est, de manière connue, disposée en regard de la sonotrode (2), derrière l'article (1) à laminer.

Le dispositif de laminage (6) comprend, en outre, des agencements aptes à positionner la bande (5) entre ladite sonotrode (2) et l'article (1) à laminer de sorte que le laminage s'effectue avec la sonotrode (2) en appui sur ladite bande (5), et au travers de celle-ci.

Les agencements se présentent par exemple sous la forme d'une base support (9) de laquelle s'étendent deux bras (10) positionnés de part et d'autre de la zone à laminer et recevant chacun une extrémité de la bande (5). Les deux bras (10) sont agencés pour positionner la bande (5) entre la zone de soudure et la sonotrode (2), sensiblement en appui sur la zone de soudure.

Comme il ressort de ce qui précède, l'invention fournit un procédé et un dispositif de laminage (6) à grande vitesse et au moyen d'une sonotrode (2) permettant d'augmenter considérablement le rendement d'un dispositif de raboutage tout en améliorant les qualités visuelle et tactile du laminage obtenu.

## Revendications

1. Procédé de laminage par ultrasons et au moyen d'une sonotrode (2), d'un article (1) thermofusible constitué par deux nappes thermofusibles (3, 4) qui sont soit en chevauchement et destinées à être raboutées par le procédé de laminage par ultrasons, soit déjà raboutées par une technique de coupage soudage ***caractérisé* en ce qu'**il consiste à positionner une bande (5) apte à conduire les vibrations générées par la sonotrode entre la sonotrode (2) et l'article à laminer (1) aux moyens d'agencements se présentant sous la forme d'une base support (9) de laquelle s'étendent deux bras (10) positionnés de part et d'autre de la zone à laminer et recevant chacun une extrémité de la bande (5), les deux bras (10) sont agencés pour positionner la bande (5) entre la zone de soudure et la sonotrode (2), sensiblement en appui sur la zone de soudure, et à effectuer l'opération de laminage en déplaçant la sonotrode (2) dans le plan de l'article (1) thermofusible à laminer, avec ladite sonotrode (2) en appui sur la bande (5), le coefficient de frottement entre la bande et la sonotrode étant inférieur au coefficient de frottement entre l'article à laminer et la sonotrode.

2. Procédé de laminage selon la revendication 1, ***caractérisé* en ce que** la bande (5) consiste en une bande (5) de matière plastique.

3. Procédé de laminage selon la revendication 1, ***caractérisé* en ce que** la bande (5) consiste en une bande (5) imprégnée ou enduite d'un revêtement présentant un coefficient de frottement avec la sonotrode inférieure au coefficient de frottement entre l'article à laminer et la sonotrode.

4. Procédé de laminage selon la revendication 3, ***caractérisé* en ce que** le revêtement est du polytétrafluoroéthylène.

5. Procédé de laminage selon la revendication 3, ***caractérisé* en ce que** la bande (5) imprégnée ou enduite consiste en une bande (5) de tissu de verre.

6. Procédé de laminage selon la revendication 3, ***caractérisé* en ce que** la bande (5) imprégnée ou enduite consiste en une bande (5) de papier.

7. Dispositif de laminage (6) d'un article (1) thermofusible par ultrasons et au moyen d'une sonotrode (2), pour la mise en oeuvre du procédé selon l'une des revendications 1 à 7, ladite sonotrode (2) étant positionnée au droit de l'article (1) thermofusible à laminer, et déplaçable relativement par rapport à l'article (1) et dans le plan dudit article (1), ***caractérisé* en ce que** le dispositif de laminage (6) comprend une bande (5), apte à conduire les vibrations générées par la sonotrode, positionnée entre ladite sonotrode (2) et l'article (1) à laminer, le coefficient de frottement entre la bande et la sonotrode étant inférieur au coefficient de frottement entre l'article à laminer et la sonotrode, et ladite sonotrode (2) étant déplaçable entre une position de repos dans laquelle ladite sonotrode (2) n'est pas en contact avec la bande (5), et une position de laminage dans laquelle ladite sonotrode (2) est en appui contre la bande (5) pour réaliser l'opération de laminage en tant que telle, ***et en ce que*** le dispositif de laminage (6) comprend des agencements aptes à positionner la bande (5) entre la sonotrode (2) et l'article à laminer (1) qui se présentent sous la forme d'une base support (9) de laquelle s'étendent deux bras (10) positionnés de part et d'autre de la zone à laminer et recevant chacun une extrémité de la bande (5), les deux bras (10) sont agencés pour positionner la bande (5) entre la zone de soudure et la sonotrode (2), sensiblement en appui sur la zone de soudure.

## Patentansprüche

1. Verfahren zum Ultraschallwalzen und mittels einer Sonotrode (2) eines thermofusiblen Artikels (1), bestehend aus zwei thermofusiblen Lagen (3, 4), die entweder überlappen und durch das Ultraschallwalzverfahren verbunden werden sollen oder bereits durch eine Schneid-Schweißtechnik verbunden sind, **dadurch gekennzeichnet, dass** es darin besteht, ein Band (5) zu positionieren, das in der Lage ist, die von der Sonotrode erzeugten Vibrationen zwischen der Sonotrode (2) und dem zu walzenden Artikel (1) zu leiten, mittels Anordnungen, die in Form einer Trägerbasis (9) vorliegen, von der sich zwei Arme (10) erstrecken, die auf beiden Seiten der zu walzenden Zone positioniert sind und jeweils ein Ende des Bandes (5) aufnehmen, wobei die beiden Arme (10) so angeordnet sind, dass das Band (5) zwischen der Schweißzone und der Sonotrode (2) positioniert wird, im Wesentlichen auf der Schweißzone aufliegt, und die Walzoperation durch Verschieben der Sonotrode (2) in der Ebene des zu walzenden thermofusiblen Artikels (1) mit der genannten Sonotrode (2) auf dem Band (5) durchführt, wobei der Reibungskoeffizient zwischen dem Band und der Sonotrode geringer ist als der Reibungskoeffizient zwischen dem zu walzenden Artikel und der Sonotrode.

2. Walzverfahren nach Anspruch 1, **dadurch gekennzeichnet, dass** das Band (5) aus einem Kunststoffband (5) besteht.

3. Walzverfahren nach Anspruch 1, **dadurch gekennzeichnet, dass** das Band (5) aus einem Band (5) besteht, das mit einer Beschichtung imprägniert oder beschichtet ist, die einen Reibungskoeffizienten mit der Sonotrode aufweist, der geringer ist als der Reibungskoeffizient zwischen dem zu walzenden Artikel und der Sonotrode.

4. Walzverfahren nach Anspruch 3, **dadurch gekennzeichnet, dass** die Beschichtung aus Polytetrafluorethylen besteht.

5. Walzverfahren nach Anspruch 3, **dadurch gekennzeichnet, dass** das imprägnierte oder beschichtete Band (5) aus einem Glasfasergewebeband (5) besteht.

6. Walzverfahren nach Anspruch 3, **dadurch gekennzeichnet, dass** das imprägnierte oder beschichtete Band (5) aus einem Papierband (5) besteht.

7. Walzvorrichtung (6) eines thermofusiblen Artikels (1) mittels Ultraschall und einer Sonotrode (2) zur Durchführung des Verfahrens nach einem der Ansprüche 1 bis 7, wobei die genannte Sonotrode (2) in Übereinstimmung mit dem zu walzenden thermofusiblen Artikel (1) positioniert ist und relativ zu dem Artikel (1) und in der Ebene des genannten Artikels (1) verschiebbar ist, **dadurch gekennzeichnet, dass** die Walzvorrichtung (6) ein Band (5) umfasst, das in der Lage ist, die von der Sonotrode erzeugten Vibrationen zu leiten, das zwischen der genannten Sonotrode (2) und dem zu walzenden Artikel (1) positioniert ist, wobei der Reibungskoeffizient zwischen dem Band und der Sonotrode geringer ist als der Reibungskoeffizient zwischen dem zu walzenden Artikel und der Sonotrode, und die genannte Sonotrode (2) zwischen einer Ruheposition, in der die genannte Sonotrode (2) nicht mit dem Band (5) in Kontakt steht, und einer Walzposition, in der die genannte Sonotrode (2) gegen das Band (5) drückt, um die Walzoperation als solche durchzuführen, verschiebbar ist, und dass die Walzvorrichtung (6) Anordnungen umfasst, die in der Lage sind, das Band (5) zwischen der Sonotrode (2) und dem zu walzenden Artikel (1) zu positionieren, die in Form einer Trägerbasis (9) vorliegen, von der sich zwei Arme (10) erstrecken, die auf beiden Seiten der zu walzenden Zone positioniert sind und jeweils ein Ende des Bandes (5) aufnehmen, wobei die beiden Arme (10) so angeordnet sind, dass das Band (5) zwischen der Schweißzone und der Sonotrode (2) positioniert wird, im Wesentlichen auf der Schweißzone aufliegt.

## Claims

1. Ultrasonic laminating process using a sonotrode (2) for a thermofusible article (1) consisting of two thermofusible layers (3, 4) which are either overlapping and intended to be joined by the ultrasonic laminating process, or already joined by a cutting-welding technique, **characterized in that** it consists of positioning a strip (5) capable of conducting the vibrations generated by the sonotrode between the sonotrode (2) and the article to be laminated (1) by means of arrangements in the form of a support base (9) from which two arms (10) extend, positioned on either side of the area to be laminated and each receiving an end of the strip (5), the two arms (10) being arranged to position the strip (5) between the welding area and the sonotrode (2), substantially resting on the welding area, and to perform the laminating operation by moving the sonotrode (2) in the plane of the thermofusible article (1) to be laminated, with said sonotrode (2) resting on the strip (5), the coefficient of friction between the strip and the sonotrode being lower than the coefficient of friction between the article to be laminated and the sonotrode.

2. Laminating process according to claim 1, **characterized in that** the strip (5) consists of a plastic strip (5).

3. Laminating process according to claim 1, **characterized in that** the strip (5) consists of a strip (5) impregnated or coated with a coating having a coefficient of friction with the sonotrode lower than the coefficient of friction between the article to be laminated and the sonotrode.

4. Laminating process according to claim 3, **characterized in that** the coating is polytetrafluoroethylene.

5. Laminating process according to claim 3, **characterized in that** the impregnated or coated strip (5) consists of a glass fabric strip (5).

6. Laminating process according to claim 3, **characterized in that** the impregnated or coated strip (5) consists of a paper strip (5).

7. Laminating device (6) for a thermofusible article (1) by ultrasound and using a sonotrode (2), for implementing the process according to any one of claims 1 to 7, said sonotrode (2) being positioned in line with the thermofusible article (1) to be laminated, and movable relative to the article (1) and in the plane of said article (1), **characterized in that** the laminating device (6) comprises a strip (5), capable of conducting the vibrations generated by the sonotrode, positioned between said sonotrode (2) and the article (1) to be laminated, the coefficient of friction between the strip and the sonotrode being lower than the coefficient of friction between the article to be laminated and the sonotrode, and said sonotrode (2) being movable between a rest position in which said sonotrode (2) is not in contact with the strip (5), and a laminating position in which said sonotrode (2) is in contact with the strip (5) to perform the laminating operation as such, and **in that** the laminating device (6) comprises arrangements capable of positioning the strip (5) between the sonotrode (2) and the article to be laminated (1) in the form of a support base (9) from which two arms (10) extend, positioned on either side of the area to be laminated and each receiving an end of the strip (5), the two arms (10) being arranged to position the strip (5) between the welding area and the sonotrode (2), substantially resting on the welding area.
